(19) Europäisches Patentamt
European Patent Office
Office européen des brevets

(11) **EP 2 843 085 A1**

(12) **EUROPEAN PATENT APPLICATION**
published in accordance with Art. 153(4) EPC

(43) Date of publication:
**04.03.2015 Bulletin 2015/10**

(21) Application number: **14789503.1**

(22) Date of filing: **14.05.2014**

(51) Int Cl.:
**C25B 9/16** (2006.01)     **C25B 1/10** (2006.01)
**C25B 9/00** (2006.01)     **C25B 11/08** (2006.01)

(86) International application number:
**PCT/JP2014/002543**

(87) International publication number:
**WO 2014/185068 (20.11.2014 Gazette 2014/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.05.2013   JP 2013102728**

(71) Applicant: **Panasonic Intellectual Property
Management Co., Ltd.
Osaka-shi, Osaka 540-6207 (JP)**

(72) Inventors:
• **TANIGUCHI, Reiko**
  **Osaka-shi, Osaka 540-6207 (JP)**
• **TOYODA, Kenji**
  **Osaka-shi, Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **METHOD FOR GENERATING OXYGEN, DEVICE FOR ELECTROLYZING WATER, AND ANODE**

(57)     The present invention provides a method for efficiently generating oxygen by electrolyzing water using a copper delafossite compound as an anode. First, in the present invention, a water electrolysis device is prepared. The water electrolysis device comprises container, a power supply, an anode, a cathode; and an aqueous electrolytic solution. The anode and the cathode are in contact with the aqueous electrolytic solution. The anode has a copper rhodium delafossite compound represented by a chemical formula $CuRhO_2$. The copper rhodium delafossite compound is in contact with the aqueous electrolytic solution. Then, an electric potential difference is applied between the cathode and the anode using the power supply to generate oxygen on the anode due to electrolysis of water which occurs on the copper rhodium delafossite compound.

FIG. 1

EP 2 843 085 A1

**Description**

BACKGROUND

1. Field of the Invention

The present invention relates to a method for generating oxygen and a water electrolysis device.

2. Description of the Related Art

Patent Literature 1 discloses a method for generating chlorine by electrolyzing sodium chloride using an anode having a delafossite compound represented by a chemical formula $ABO_2$ (where A represents platinum, palladium, silver, or cobalt, and B represents chrome, iron, cobalt, rhodium, aluminum, gadolinium, scandium, indium, thallium, lead, ruthenium, or lanthanide) on the surface thereof. However, Patent Literature 1 is silent about a method for generating oxygen.

[Patent Literature]

[Patent Literature 1] Great Britain Patent No. 1400948B

[Non Patent Literature]

[Non Patent Literature 1] J. Suntivich, et al., "A Perovskite Oxide Optimized for Oxygen Evolution Catalysis from Molecular Orbital Principles" Science, vol. 334, December 2011. pp. 1383-1385

SUMMARY OF THE INVENTION

The theoretical voltage required for electrolysis of water is 1.23 volts. However, in practice, a voltage more than 1.23 volts is necessary for electrolysis of water due to overvoltage in the electrode. The smaller the overvoltage is, the more efficiently the electrolysis of water proceeds. The term "overvoltage" used in the instant specification means an electric potential difference from a theoretical voltage necessary for generating oxygen on the anode by electrolyzing water. For example, when a voltage of 2.0 volts is required to generate oxygen by electrolyzing water using an anode formed of metal M, the metal M has an overvoltage of 0.77 volts (= 2.0 volts - 1.23 volts).

As demonstrated in the comparative examples which will be described later, the present inventors generated oxygen by electrolyzing water using various copper delafossite compounds. As a result, almost all of the copper delafossite compounds were not suitable for electrolysis of water due to the large overvoltage thereof.

However, the present inventors found a copper delafossite compound suitable for generating oxygen by electrolyzing water from among various copper delafossite compounds to achieve the present invention. An object of the present invention is to provide a method for efficiently generating oxygen by electrolyzing water using a copper delafossite compound as an anode. Another object of the present invention is to provide a water electrolysis device suitable for the method.

The present invention is a method for generating oxygen, the method comprising:

(a) preparing a water electrolysis device comprising:

a container;
a power supply;
an anode;
a cathode; and
an electrolyte aqueous solution; wherein
the anode and the cathode are in contact with the electrolyte aqueous solution,
the anode has a copper rhodium delafossite compound represented by a chemical formula $CuRhO_2$, and
the copper rhodium delafossite compound is in contact with the electrolyte aqueous solution, and

(b) applying an electric potential difference between the cathode and the anode using the power supply to generate oxygen on the anode due to electrolysis of water which occurs on the copper rhodium delafossite compound.

The present invention provides a method for efficiently generating oxygen by electrolyzing water using a copper delafossite compound as an anode. The present invention also provides a water electrolysis device suitable for the method.

BRIEF DESCRIPTION OF THE DRAWINGS

FIG. 1 shows a schematic view of a water electrolysis device 100 according to a first embodiment;
FIG. 2 shows a schematic view of a thin-film electrolysis cell;
FIG. 3 is a graph showing a calculation result of the occupation number of an eg orbital in a B site of a copper delafossite compound;
FIG. 4 is a graph showing a result of an X-ray diffraction measurement;
FIG. 5 is a graph showing an electric current - voltage property measured in the example 1 and the comparative examples 1 - 4;
FIG. 6 is a graph showing an electric current - voltage property measured in the example 1 and the reference examples 1 - 3;
FIG. 7A is a scanning electron microscope image of an anode substrate according to the example 1 before a sweeping of an electric potential was started;
FIG. 7B is a scanning electron microscope image of an anode substrate according to the example 1 after the sweeping of the electric potential was repeated 1,000 times;
FIG. 8 is a graph showing an electric current - voltage property in the example 1 before and after the sweeping of the electric potential was repeated 1,000 times;
FIG. 9A is a scanning electron microscope image of an anode substrate according to the comparative example 4 before a sweeping of an electric potential was started;
FIG. 9B is a scanning electron microscope image of an anode substrate according to the comparative example 4 after the sweeping of the electric potential was repeated 10 times; and
FIG. 10 is a graph showing an electric current - voltage property in the comparative example 4 before and after the sweeping of the electric potential was repeated 10 times.

DETAILED DESCRIPTION OF THE EMBODIMENTS

The embodiments of the present invention will be described below with reference to the drawings.

(First embodiment)

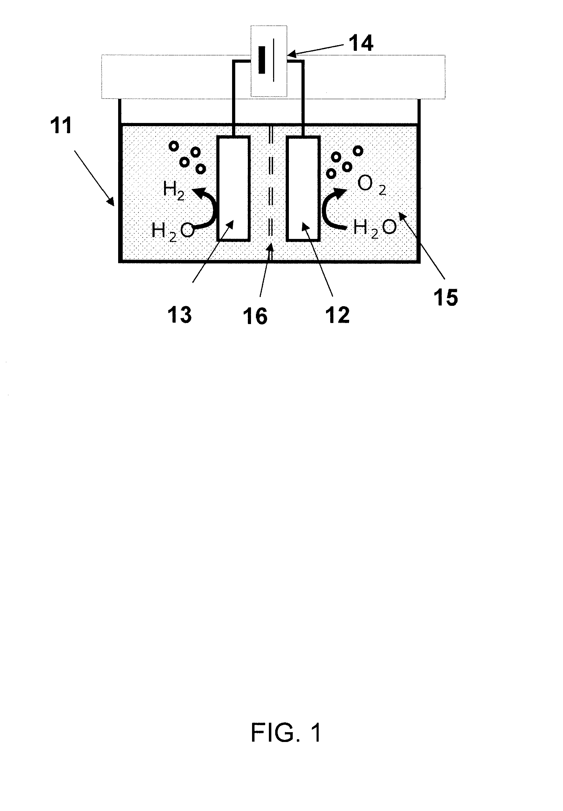

FIG. 1 shows a schematic view of a water electrolysis device 100 according to a first embodiment. The water electrolysis device 100 according to the first embodiment comprises a container 11, an anode 12, a cathode 13, and a power supply 14.

(Container 11)

An electrolyte aqueous solution 15 is stored in the container 11. An example of the electrolyte aqueous solution 15 is an alkaline aqueous solution such as potassium hydroxide or sodium hydroxide. Water is electrolyzed using the alkaline aqueous solution to improve the efficiency of the oxygen generation and to decrease an electric power necessary for the electrolysis.
Another example of the electrolyte included in the electrolyte aqueous solution 15 is sulfuric acid, nitric acid, or perchloric acid. More specifically, an example of a cation of the electrolyte included in the electrolyte aqueous solution 15 is a proton, an alkali metal ion, or an alkali earth metal ion. An example of an anion of the electrolyte included in the electrolyte aqueous solution 15 is a hydroxide ion represented by the chemical formula $OH^-$, a sulfate ion represented by the chemical formula $SO_4^{2-}$, a nitrate ion represented by the chemical formula $NO_3^-$, or a perchlorate ion represented by the chemical formula $ClO_4^-$. A halide ion represented by the chemical formula $F^-$, $Cl^-$, $Br^-$ or $I^-$ is excluded from the anion of the electrolyte included in the electrolyte aqueous solution 15. In case where the electrolyte aqueous solution 15 contains halide ions, not oxygen but a halogen is generated on the anode 12. An example of the electrolyte included in the electrolyte aqueous solution 15 is a salt composed of such a cation and such an anion. For example, still another example of the electrolyte included in the electrolyte aqueous solution 15 is sodium sulfate, sodium nitrate, or potassium perchlorate.

(Anode 12)

The anode 12 and the cathode 13 are located in the container 11 in such a manner that the anode 12 and the cathode 13 are in contact with the electrolyte aqueous solution 15. The anode 12 and the cathode 13 are electrically connected with the power supply 14 which will be described later. Oxygen is generated on the anode 12. Hydrogen is generated on the cathode 13.

The anode 12 has a copper rhodium delafossite compound. Desirably, the anode 12 has the copper rhodium delafossite compound on the surface thereof so that oxygen is generated on the surface of the copper rhodium delafossite compound included in the anode 12. The copper rhodium delafossite compound is represented by the chemical formula $CuRhO_2$. In other words, the copper rhodium delafossite compound means an oxide having a delafossite compound structure in which an A site is copper and a B site is rhodium.

The copper rhodium delafossite compound has high chemical stability. For this reason, the copper rhodium delafossite compound is poorly decomposed, even when used in a wide pH range.

A method for synthesizing the copper rhodium delafossite compound is not limited. An example of the method for synthesizing the copper rhodium delafossite compound is a solid-phase reaction method, a hydrothermal synthesis method, or a sputtering method.

The anode 12 may be formed of a conductive substrate supporting the copper rhodium delafossite compound. The method for supporting the copper rhodium delafossite compound is not limited. For example, a slurry containing the synthesized copper rhodium delafossite compound is prepared, and then the slurry is applied to the conductive substrate to support the copper rhodium delafossite compound on the conductive substrate. The slurry may contain conductive carbon particles, tin oxide, an additive for improving dispersibility, and/or a material for preventing bubbles generated during the electrolysis from being aggregated. These do not cause deterioration of a catalyst effect of the copper rhodium delafossite compound.

The conductive substrate may have various kinds of shapes such as a plate, a rod, or a mesh. It is desirable that the material of the conductive substrate is a material capable of maintaining its conductivity even if the conductive substrate is exposed to an oxidation atmosphere. An example of the materials of the conductive substrate is valve metal or carbon. The valve metal means a metal having a surface on which a passivation film is formed when the surface is exposed to an acid. An example of the valve metal is titanium, aluminum, chrome, or an alloy thereof.

The anode 12 does not have to comprise the conductive substrate. Such an anode 12 may be provided by pressing or sintering particles of the copper rhodium delafossite compound. Such an anode 12 may contain a conductive carbon material for improving its conductivity, a flux material for raising the adhesivity between the particles and/or a material for preventing the bubbles generated during the electrolysis from being aggregated.

The anode 12 is in contact with the electrolyte aqueous solution 15. Particularly, the copper rhodium delafossite compound included in the anode 12 is in contact with the electrolyte aqueous solution 15. Only a part of the anode 12 may be in contact with the electrolyte aqueous solution 15, as far as the copper rhodium delafossite compound is in contact with the electrolyte aqueous solution 15.

(Cathode 13)

The cathode 13 is formed of a conductive substance. Particularly, the surface of the cathode 13 is formed of a conductive substance. An example of the suitable conductive substance is platinum or a nickel compound, both of which have a low overvoltage for generating hydrogen. The material of the conductive substance is not limited, unless the conductive substance is decomposed in the electrolyte aqueous solution 15.

The cathode 13 is in contact with the electrolyte aqueous solution 15. Particularly, the conductive substance included in the cathode 13 is in contact with the electrolyte aqueous solution 15. Only a part of the cathode 13 may be in contact with the electrolyte aqueous solution 15, as far as the conductive substance is in contact with the electrolyte aqueous solution 15.

(Power supply 14)

The power supply 14 is used to apply a predetermined voltage between the anode 12 and the cathode 13. The predetermined voltage is applied between the anode 12 and the cathode 13 using the power supply 14 to electrolyze water contained in the electrolyte aqueous solution 15. It is desirable to apply a voltage of not less than 1.6 volts and not more than 4.0 volts. An example of the power supply 14 is a potentiostat or a battery.

(Diaphragm 16)

The water electrolysis device 100 has a diaphragm 16 between the anode 12 and the cathode 13. The diaphragm 16 divides the inside of the container 11 into a first chamber where the anode 12 is located and a second chamber where the cathode 13 is located.

An example of the diaphragm 16 is a porous ceramics substrate such as an unglazed plate, a porous polymer membrane such as a polypropylene film, or an ion-exchange membrane such as Nafion (registered trade mark).

The diaphragm 16 is provided such that oxygen generated on the anode 12 is not mixed with hydrogen generated on the cathode 13. No problem about the electrolysis of water occurs in the absence of the diaphragm 16; however, oxygen generated on the anode 12 may transfer to the cathode 13. Oxygen which has been transferred to the cathode 13 is turned into water. As a result, the efficiency of the oxygen generation is decreased. In order to control such a reverse reaction, it is desirable to provide the water electrolysis device 100 with the diaphragm 16.

In the water electrolysis device 100 shown in FIG. 1, the anode 12, the diaphragm 16, and the cathode 13 are disposed at intervals. However, the water electrolysis device 100 may be composed of an integrated electrolysis cell in which the anode 12 and the cathode 13 are adhered on the front and back surfaces of the diaphragm 16, respectively.

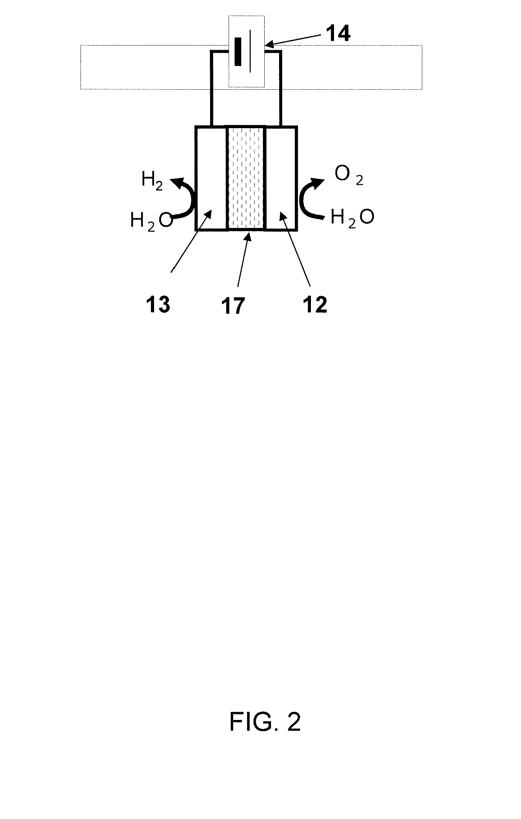

FIG. 2 shows a thin-film electrolysis cell which is another example of the water electrolysis device. The thin-film electrolysis cell shown in FIG. 2 comprises an electrolyte film 17, the anode 12 formed on the front surface of the electrolyte film 17, and the cathode 13 formed on the back surface of the electrolyte film 17. The thin-film electrolysis cell comprises the electrolyte film 17 instead of the container 11 of the water electrolysis device 100. An example of the electrolyte film 17 is an ion-exchange membrane or a ceramic solid electrolyte film. An example of the ion-exchange membrane is a cation exchange membrane such as Nafion (registered trade mark) or Selemion (registered trade mark), or an anion exchange membrane (available from Tokuyama Corporation, for example). An example of the ceramic solid electrolyte film is a zirconia-based ceramic film of yttria-stabilized zirconia (hereinafter, referred to as "YSZ") or scandia-stabilized zirconia (hereinafter, referred to as "ScSZ"). The thin-film electrolysis cell comprising the electrolyte film 17 formed of the ion-exchange membrane is a polymer electrolyte membrane cell (hereinafter, referred to as "PEM cell"). The electrolysis cell comprising the electrolyte film 17 formed of the ceramic solid electrolyte is a solid electrolyte electrolysis cell. The solid electrolyte electrolysis cell is also a high-temperature steam electrolysis cell.

(Finding by the present inventors)

Since a copper oxide has a high overvoltage required for oxygen generation, it is not suitable for a material of the anode. See the reference example 1 which will be described later.

A metal oxide having a delafossite structure is generally represented by the chemical formula $ABO_2$. Great Britain Patent Publication No. 1400948B discloses an anode containing a delafossite compound. However, Great Britain Patent Publication No. 1400948B fails to disclose that energy efficiency is varied depending on the material of the B site thereof.

The present inventors earnestly researched the possibility that the energy efficiency of a material having a delafossite structure where the A site is copper is varied depending on the material of the B site.

First, the present inventors considered this matter theoretically.

According to Non Patent Liturature 1, the closer to one the occupation number of the eg orbital in the B site of the transition metal contained in the perovskite oxide represented by the chemical formula $ABO_3$ is, the lower the overvoltage required to generate oxygen is. As just described, the property of the oxygen-generating catalyst of the oxide may be relevant to the electron structure of the oxide.

The present inventors expected that the copper delafossite compound also has a similar relationship and calculated the electronic state of the copper delafossite compound on the basis of the density functional theory.

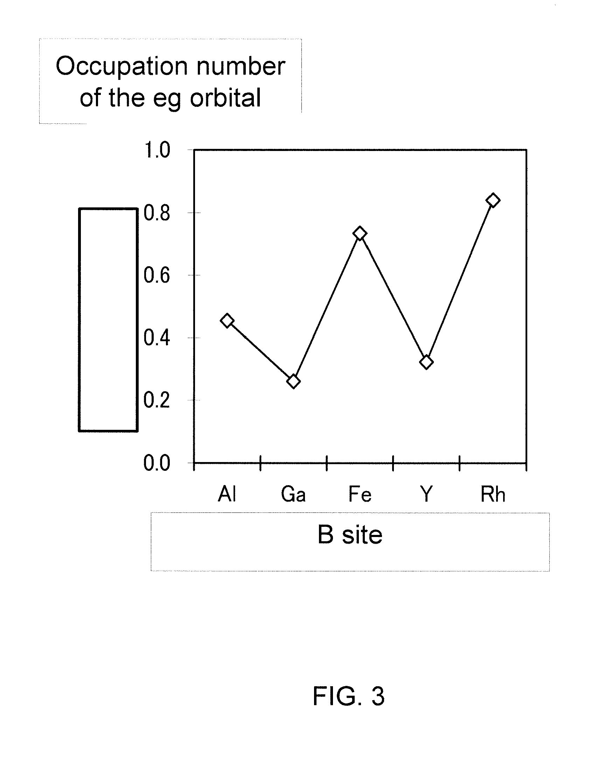

FIG. 3 shows a calculation result of the occupation number of the $e_g$ orbital in the B site of the copper delafossite compound.

The vertical axis in FIG. 3 represents the occupation number of the $e_g$ orbital, and the horizontal axis in FIG. 3 represents the material of the B site. In the calculation result shown in FIG. 3, the A site is copper, and the B site is aluminum, gallium, iron, yttrium, and rhodium.

As is clear from the result shown in FIG. 3, the occupation number in the B site has the following relationship (II).

$$Ga < Y < Al \ll Fe < Rh \qquad (II)$$

For this reason, it is expected that the overvoltage necessary to generate oxygen decreases in order of rhodium, iron, aluminum, yttrium, and gallium. Since the occupation number of iron is the same as that of rhodium, it is expected that the overvoltage necessary to generate oxygen in the case where iron is used is the same as the overvoltage in the case where rhodium is used.

However, as is clear from comparison of the example 1 to the comparative example 2, both of which will be described later, the present inventors found that the copper rhodium delafossite compound has a much lower overvoltage than the copper iron delafossite compound. In other words, according to the calculation result, the overvoltage of the copper rhodium delafossite compound was expected to be the same as the overvoltage of the copper iron delafossite compound; however, in practice, the present inventors found that water is electrolyzed at a much lower overvoltage, namely, with significantly excellent energy efficiency, in the case where an anode formed of the copper rhodium delafossite compound is used, compared to the case where an anode formed of the copper iron delafossite compound is used.

As is clear from comparison of the example 1 to the comparative examples 1 - 4, all of which will be described later, water is electrolyzed at a low overvoltage, namely, with excellent energy efficiency, using the anode 12 having the copper rhodium delafossite compound. The water electrolysis device 100 comprising the anode 12 formed of the copper rhodium delafossite compound has the same energy efficiency as the one comprising the anode 12 formed of cobalt oxide $Co_3O_4$ which has high energy efficiency. See the example 1 and the reference example 2. On the other hand, the present inventors found that the overvoltage necessary to generate oxygen by electrolyzing water is high in the case where a copper delafossite compound other than the copper rhodium delafossite compound is used. See the comparative examples 1 - 4.

EXAMPLES

The following examples describe the present invention in more detail. The present inventors performed the following experiments to clarify the relationship between the material of the anode 12 used for the water electrolysis device 100 and the voltage required to generate oxygen on the anode 12.

(Example 1)

(Preparation of the anode 12)

The anode 12 according to the example 1 was made by supporting a copper rhodium delafossite compound on a conductive carbon substrate.

First, the copper rhodium delafossite compound was prepared by a solid-phase reaction method.

Particularly, copper(I) oxide represented by the chemical formula $Cu_2O$ (available from Wako Pure Chemical Industries, Ltd., 1.17 grams) and rhodium(III) oxide represented by the chemical formula $Rh_2O_3$ (available from Wako Pure Chemical Industries, Ltd., 2.0 grams) were ground and mixed sufficiently in an agate mortar to give a mixture.

The mixture was supplied to a tableting machine. Then, the mixture was pressed at a pressure of 40 MPa to give a tablet containing copper(I) oxide and rhodium(III) oxide. The tablet had a diameter of 25 millimeters.

The tablet was subjected to sintering in a muffle furnace (available fromFull-tech Furnace Co. Ltd., trade name: FT-1 01 FMW) under a tempareture of 1,050 degrees Celsius for 12 hours to give a sintered tablet. The sintered tablet was ground in the agate mortar. In this way, particles of the copper rhodium delafossite compound were obtained.

The obtained particles of the copper rhodium delafossite compound were subjected to X-ray diffraction using an X-ray diffraction device (available from PANalytical, trade name: X'Pert PRO MPD, Target: Cu, Acceleration voltage: 45 kV).

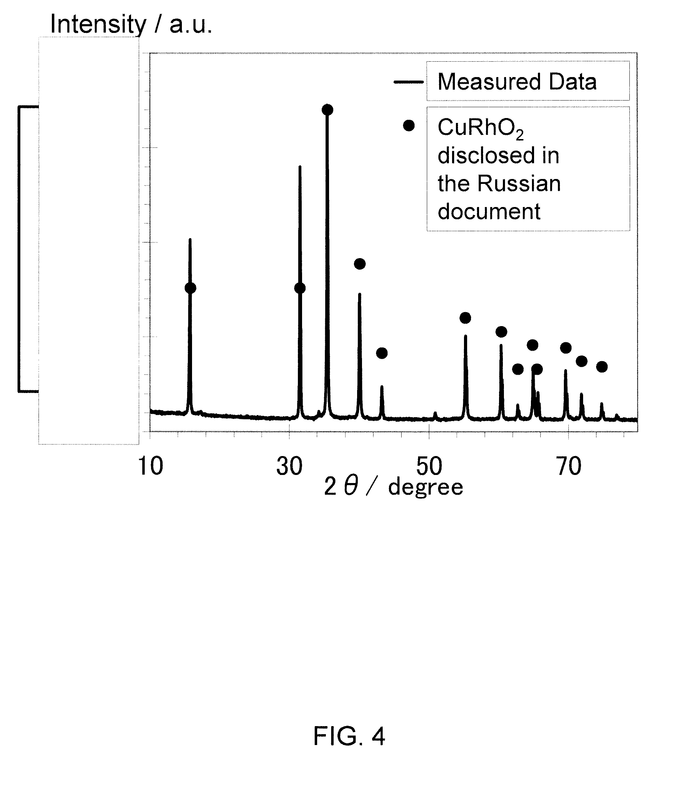

FIG. 4 shows a result of the X-ray diffraction measurement. The diffraction angle and relative intensity of the peak shown in FIG. 4 was in good accord with the diffraction angle and the relative intensity calculated from the lattice constant of the copper rhodium delafossite compound taught in Russian Journal of Inorganic chemistry, (1986) vol. 31, p. 1649. For this reason, the obtained particles were identified as the copper rhodium delafossite compound.

The particles of the copper rhodium delafossite compound (60 milligrams) were dispersed in pure water (2 milliliters) to prepare a slurry.

Ultrasonic was applied in acetone to a high density percolation graphite (hereinafter, referred to as "HPG substrate", available form Toyo Tanso Co., Ltd., trade name: HPG-59) having an effective reaction area of 0.28 square centimeters to wash the HPG substrate. Then, ultrasonic was applied in ethanol to the HPG substrate to wash the HPG substrate again.

The slurry (20 microliters) was dropped on the HPG substrate. Then, the HPG substrate was dried under a temperature of 80 degrees Celsius for 10 minutes. A Nafion dispersion liquid having a concentration of 5 percent (available form Sigma Aldrich) was diluted four times using ethanol to prepare a Nafion dispersion liquid having a concentration of 1.2 percent. Then, the Nafion dispersion liquid (10 microliters) was dropped on the HPG substrate. Finally, the HPG substrate was dried under a temperature of 80 degrees Celsius for 10 minutes. In this way, the anode containing the copper rhodium delafossite compound was obtained.

(Evaluation of oxygen generation property)

The obtained anode substrate was attached as a working electrode to a rotating disk electrode attachment (available from Nikko Keisoku) using a cylindrical cap.

Then, a reversible hydrogen electrode (hereinafter, referred to as "RHE") was used as a reference electrode. A platinum electrode was used as a counter electrode. An aqueous potassium hydroxide solution having a concentration of 1 mol/L was used as an electrolyte solution. An electric potential was swept using a potentiostat (available from ALS Co., Ltd., trade name: ALS-760C) to measure an electric current - voltage property.

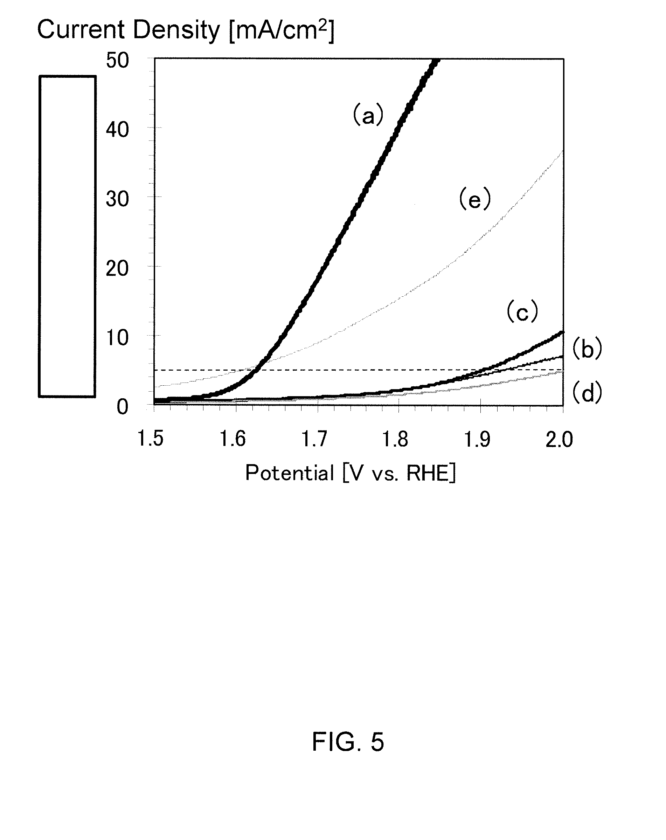

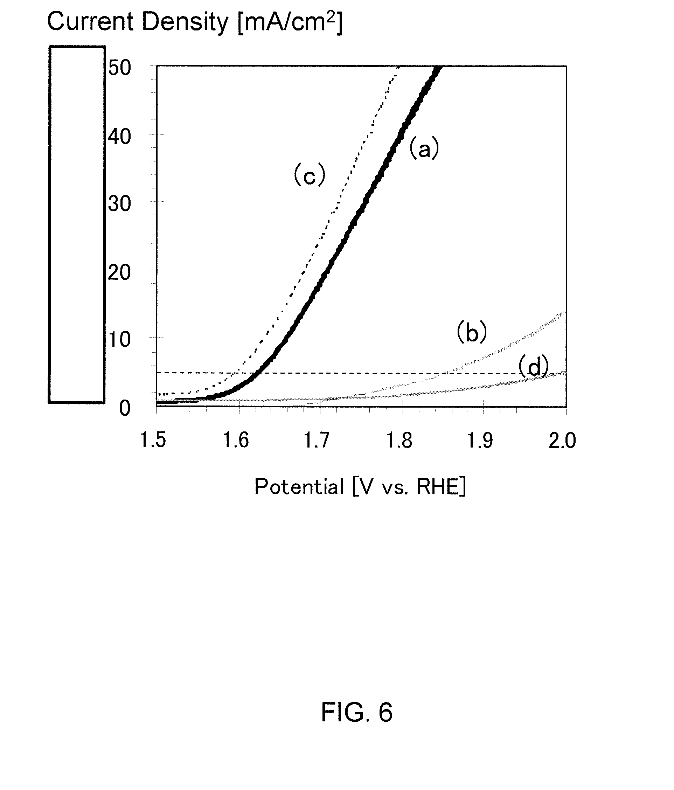

The curve (a) in FIG. 5 and FIG. 6 is the electric current - voltage property according to the example 1 at a rotating speed of 2000 rpm. The overvoltage was defined by the following mathematical formula (III):

$$\text{Overvoltage} = \text{Electric Potential Difference EPD1 (volt vs. RHE)} - 1.23 \text{ (volt vs. RHE)} \quad \text{(III)}$$

where the Electric Potential Difference EPD1 represents an electric potential difference between the reference electrode and the working electrode at the moment when an electric current of 5 mA/cm$^2$ flows between the counter electrode and the working electrode.

The efficiency of oxygen generation is increased with a decrease in the overvoltage.

As is clear from FIG. 5, the anode according to the example 1 had an electric potential difference EPD1 of 1.62 volts. For this reason, the anode according to the example 1 had an overvoltage of 0.39 volts.

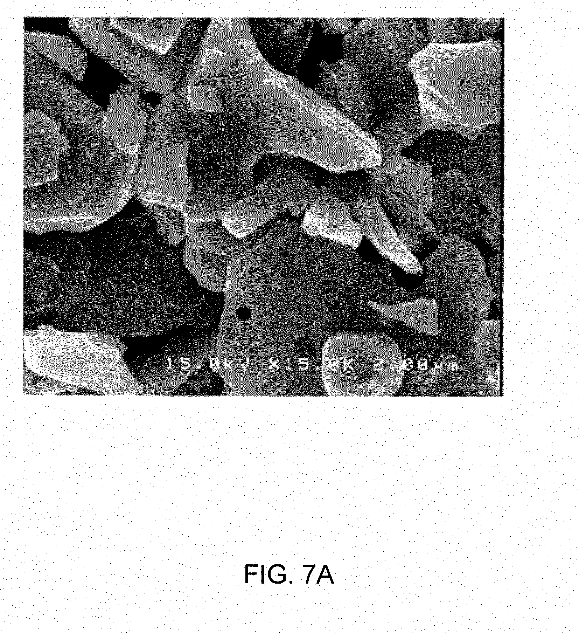

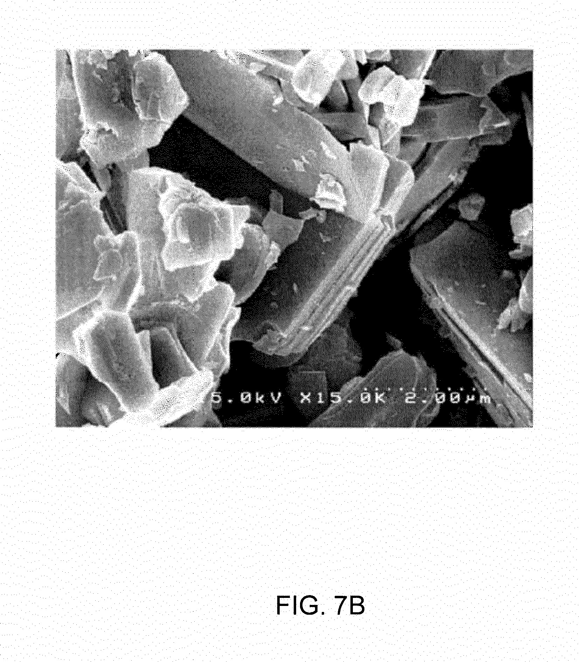

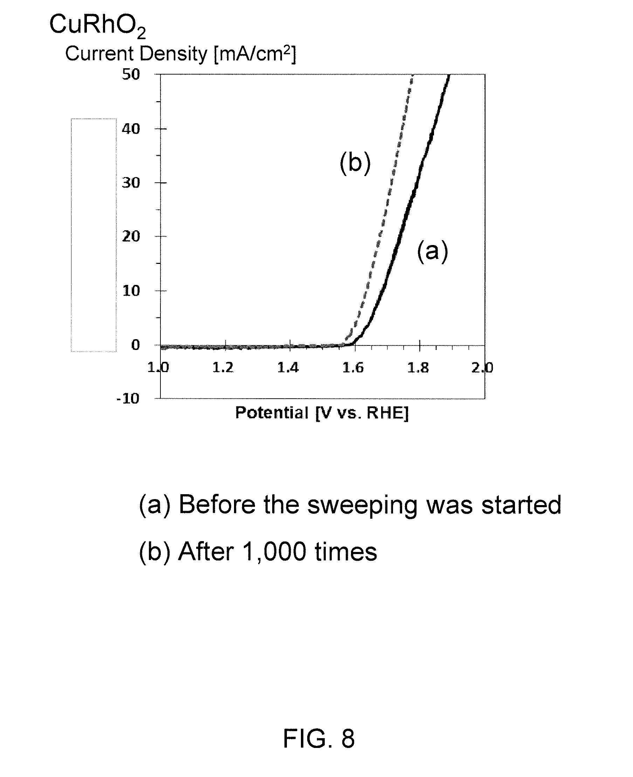

FIG. 7A is a scanning electron microscope image of the anode substrate according to the example 1 before the sweeping of the electric potential was started. The sweeping of the electric potential was repeated 1,000 times using the potentiostat. FIG. 7B is a scanning electron microscope image of the anode substrate according to the example 1 after the sweeping of the electric potential was repeated 1,000 times. FIG. 8 is a graph showing an electric current - voltage property in the example 1 before and after the sweeping of the electric potential was repeated 1,000 times. As is understood from FIG. 7A, FIG. 7B, and FIG. 8, the anode substrate was not deteriorated. Instead, after the sweeping of the electric potential was repeated 1,000 times, the electric current - voltage property was improved. In other words, after the sweeping of the electric potential was repeated 1,000 times, a higher current density was obtained using a lower voltage.

(Comparative example 1)

A copper aluminum delafossite compound represented by the chemical formula CuAlO$_2$ was prepared as below and the overvoltage thereof was calculated.

Copper(II) oxide represented by the chemical formula CuO (available from Kojundo Chemical Laboratory Co., Ltd., 6.56 grams) and aluminum oxide represented by the chemical formula Al$_2$O$_3$ (available from Kojundo Chemical Laboratory Co., Ltd., 4.20 grams) were ground and mixed in the agate mortar to give a mixture. Similarly to the case of the example 1, a tablet containing copper(II) oxide and aluminum oxide was obtained.

The obtained tablet was put on a board for sintering, and then the board for sintering having the tablet was disposed in a tubular furnace (available from Fukada Electric Factory Corporation, trade name: FKS). After the atomosphere in the furnace was substituted with nitrogen at a flow rate of 200 sccm, the tablet was subjected to sintering at a nitrogen flow rate of 50 sccm under a sintering temperature of 1100 degrees Celsius for 10 hours to give a sintered tablet. The sintered tablet was ground in the agate mortar to give particles of the copper aluminum delafossite compound. Instead of copper(II) oxide represented by the chemical formula CuO, copper(I) oxide represented by the chemical formula Cu$_2$O (5.84 grams) was used to give similar particles of the copper aluminum delafossite compound.

Similarly to the case of the example 1, an anode containing the copper aluminum delafossite compound was prepared and the oxygen generation property thereof was evaluated. The curve (b) in FIG. 5 is an electric current - voltage property of the anode containing the copper aluminum delafossite compound according to the comparative example 1. As is clear from FIG. 5, the anode according to the comparative example 1 had an electric potential difference EPD1 of 1.92 volts. Therefore, the anode according to the comparative example 1 had an overvoltage of 0.69 volts.

(Comparative example 2)

A copper iron delafossite compound represented by the chemical formula CuFeO$_2$ was prepared as below and the overvoltage thereof was calculated.

Copper(I) oxide represented by the chemical formula Cu$_2$O (available from Wako Pure Chemical Industries, Ltd, 3.50 grams) and iron oxide represented by the chemical formula Fe$_2$O$_3$ (available from Kojundo Chemical Laboratory Co., Ltd., 3.99 grams) were ground and mixed in the agate mortar to give a mixture. Similarly to the case of the example 1, a tablet containing copper(I) oxide and iron oxide was obtained.

Then, a sintered tablet was obtained from the tablet using the tubular furnace similarly to the case of the comparative example 1, except that the sintering temeprature was 1,000 degrees Celsius. The sintered tablet was ground in the agate mortar to give particles of the copper iron delafossite compound represented by the chemical formula $CuFeO_2$.

Similarly to the case of the example 1, an anode containing the copper iron delafossite compound was prepared and the oxygen generation property thereof was evaluated. The curve (c) in FIG. 5 is an electric current - voltage property of the anode containing the copper iron delafossite compound according to the comparative example 2. As is clear from FIG. 5, the anode according to the comparative example 2 had an electric potential difference EPD1 of 1.90 volts. Therefore, the anode according to the comparative example 2 had an overvoltage of 0.67 volts.

(Comparative example 3)

A copper yttrium delafossite compound represented by the chemical formula $CuYO_2$ was prepared as below and the overvoltage thereof was calculated.

Copper(II) oxide represented by the chemical formula CuO (available from Kojundo Chemical Laboratory Co., Ltd., 7.90 grams) and yttrium oxide represented by the chemical formula $Y_2O_3$ (available from Kojundo Chemical Laboratory Co., Ltd., 11.29 grams) were ground and mixed in the agate mortar to give a mixture. Similarly to the case of the example 1, a tablet containing copper(II) oxide and yttrium oxide was obtained.

Then, a sintered tablet was obtained from the tablet using the tubular furnace similarly to the case of the comparative example 1, except that the sintering temeprature was 1,000 degrees Celsius. The sintered tablet was ground in the agate mortar to give particles of the copper yttrium oxide compound represented by the chemical formula $Cu_2Y_2O_5$.

The obtained particles of the copper yttrium oxide compound were supplied to the tableting machine, again. Then, the particles were pressed at a pressure of 40 MPa to give a tablet containing the copper yttrium oxide compound. A sintered tablet was obtained from the tablet using the tubular furnace similarly to the case of the comparative example 1, except that the sintering temeprature was 1,190 degrees Celsius. The sintered tablet was ground in the agate mortar to give particles of the copper yttrium delafossite compound represented by the chemical formula $CuYO_2$.

Similarly to the case of the example 1, an anode containing the copper yttrium delafossite compound was prepared and the oxygen generation property thereof was evaluated. The curve (d) in FIG. 6 is an electric current - voltage property of the anode containing the copper yttrium delafossite compound according to the comparative example 3. As is clear from FIG. 6, the anode according to the comparative example 3 had an electric potential difference EPD1 of 2.00 volts. Therefore, the anode according to the comparative example 3 had an overvoltage of 0.77 volts.

(Comparative example 4)

A copper gallium delafossite compound represented by the chemical formula $CuGaO_2$ was prepared as below and the overvoltage thereof was calculated.

Copper(II) oxide represented by the chemical formula CuO (available from Kojundo Chemical Laboratory Co., Ltd., 7.99 grams) and gallium(III) oxide represented by the chemical formula $Ga_2O_3$ (available from Kojundo Chemical Laboratory Co., Ltd., 9.37 grams) were ground and mixed in the agate mortar to give a mixture. Similarly to the case of the example 1, a tablet containing copper(II) oxide and gallium(III) oxide was obtained. Then, a sintered tablet was obtained from the tablet using the tubular furnace similarly to the case of the comparative example 1, except that the sintering temeprature was 1,000 degrees Celsius. The sintered tablet was ground in the agate mortar to give particles of the copper gallium delafossite compound represented by the chemical formula $CuGaO_2$. Instead of copper(II) oxide represented by the chemical formula CuO, copper(I) oxide represented by the chemical formula $Cu_2O$ (7.18 grams) was used to give similar particles of the copper gallium delafossite compound.

Similarly to the case of the example 1, an anode containing the copper gallium delafossite compound was prepared and the oxygen generation property thereof was evaluated. In the comparative example 4, the electric current flowing between the counter electrode and the working electrode was increased with an increase in the number of times of the sweeping using the potentiostat. After the sweeping was repeated 10 times, the electric current was saturated. The curve (e) in FIG. 5 is an electric current - voltage property of the electrode according to the comparative example 4 after the electric current was saturated. After the electric current was saturated, the anode according to the comparative example 4 was observed using an electron microscope. As a result, a part of the copper gallium oxide crystal appeared to be eluted. For this reason, it was believed that the anode according to the comparative example 4 was deteriorated due to the sweeping using the potentiostat.

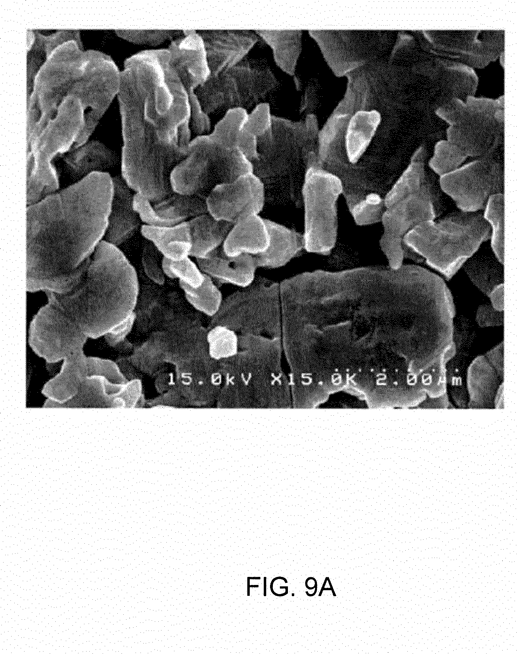

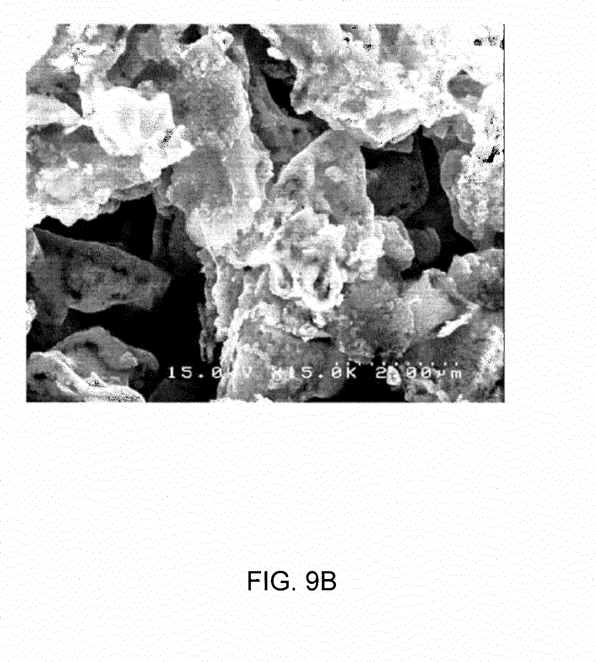

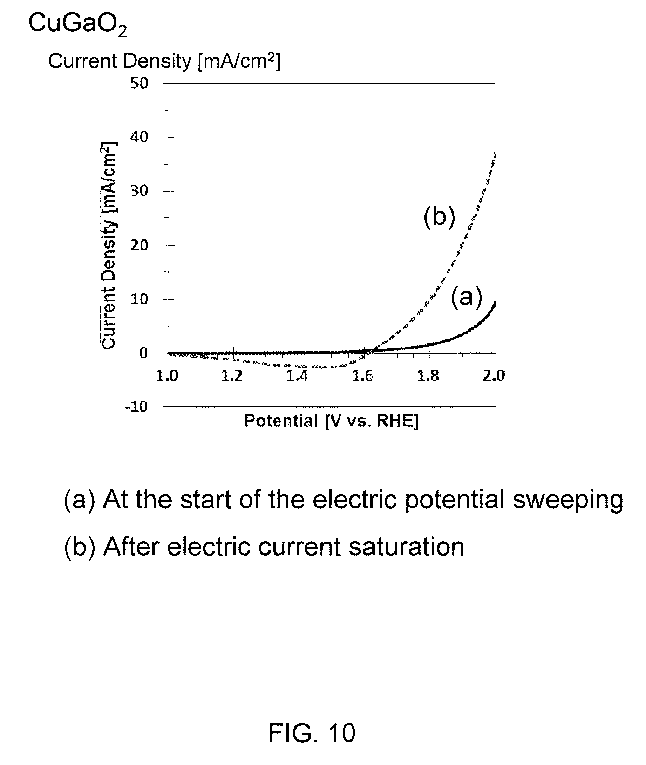

FIG. 9A is a scanning electron microscope image of the anode substrate according to the comparative example 4 before the sweeping of the electric potential was started. The sweeping of the electric potential was repeated 10 times using the potentiostat. FIG. 9B is a scanning electron microscope image of the anode substrate according to the comparative example 4 after the electric current was saturated by repeating the sweeping of the electric potential 10 times. FIG. 10 is a graph showing an electric current - voltage property in the comparative example 4 before and after the sweeping of the electric potential was repeated 10 times. As is understood from FIG. 9A, FIG. 9B, and FIG. 10, the anode substrate was deteriorated. Furthermore, as seen in FIG. 10, a cathode current due to the redeposition was observed in the comparative example 4.

(Reference example 1)

An anode supporting a copper oxide represented by the chemical formula CuO was prepared as below and the overvoltage thereof was calculated.
Copper(II) oxide represented by the chemical formula CuO (available from Kojundo Chemical Laboratory Co., Ltd., 25 milligrams) was dispersed in pure water (2 milliliters) to prepare a slurry. Similarly to the case of the example 1, an anode was prepared using the slurry and the oxygen generation property thereof was evaluated. The curve (b) in FIG. 6 is an electric current - voltage property of the anode according to the reference example 1. The anode according to the reference example 1 had an electric potential difference EPD1 of 1.85 volts. Therefore, the anode according to the reference example 1 had an overvoltage of 0.62 volts.

(Reference example 2)

An anode supporting cobalt oxide represented by the chemical formula $Co_3O_4$ was prepared as below and the overvoltage thereof was calculated.
Cobalt oxide represented by the chemical formula $Co_3O_4$ (available from Furuuchi Chemical Corporation, 40 milligrams) was dispersed in pure water (2 milliliters) to prepare a slurry. Similarly to the case of the example 1, an anode was prepared using the slurry and the oxygen generation property thereof was evaluated. The curve (c) in FIG. 6 is an electric current - voltage property of the anode according to the reference example 2. The anode according to the reference example 2 had an electric potential difference EPD1 of 1.60 volts. Therefore, the anode according to the reference example 2 had an overvoltage of 0.37 volts.

(Reference example 3)

In the reference example 3, the HPG substrate itself used in the example 1 was used as an anode. In other words, the anode according to the reference example 3 was composed only of the HPG substrate used in the example 1. After the HPG substrate was washed similarly to the case of the example 1, the oxygen generation property thereof was evaluated. The curve (d) in FIG. 6 shows the electric current - voltage property of the anode according to the reference example 3. The anode according to the reference example 3 had an electric potential difference EPD1 of 2.00 volts. Therefore, the anode according to the reference example 3 had an overvoltage of 0.77 volts.
The following Table 1 shows the materials, the electric potential differences EPD1, and the overvoltage of the anodes according to the example 1, the comparative examples 1 - 4, and the reference examples 1 - 3.

[Table 1]

| | Catalyst material | Electric potential difference EPD1 (vs. RHE) | Overvoltage (vs. RHE) |
|---|---|---|---|
| Example 1 | $CuRhO_2$ | 1.62 volts | 0.39 volts |
| Comparative example 1 | $CuAlO_2$ | 1.92 volts | 0.69 volts |
| Comparative example 2 | $CuFeO_2$ | 1.90 volts | 0.67 volts |
| Comparative example 3 | $CuYO_2$ | 2.00 volts | 0.77 volts |
| Comparative example 4 | $CuGaO_2$ | (unmeasurable) | - |
| Reference example 1 | CuO | 1.85 volts | 0.63 volts |
| Reference example 2 | $Co_3O_4$ | 1.60 volts | 0.37 volts |
| Reference example 3 | (HPG substrate) | 2.00 volts | 0.77 volts |

As is clear from Table 1, only the copper rhodium delafossite compound according to the example 1 has a low overvoltage, except for the reference example 2. This overvoltage was same as the overvoltage of $Co_3O_4$. For this reason, a water electrolysis device comprising the anode formed of the copper rhodium delafossite compound according to the example 1 has the same energy efficiency as a water electrolysis device comprising the anode formed of cobalt oxide $Co_3O_4$ which has high energy efficiency. Furthermore, the result shown in Table 1 was unexpectable over the calculation result of the electronic state on the basis of the density functional theory.

INDUSTRIAL APPLICABILITY

The present invention provides a method for efficiently generating oxygen by electrolyzing water using a copper delafossite compound as an anode.

REFERENTIAL SIGNS LIST

    11: container
    12: anode
    13: cathode
    14: power supply
    15: electrolyte aqueous solution
    16: diaphragm
    17: electrolyte film

**Claims**

1.  A method for generating oxygen, the method comprising:

    (a) preparing a water electrolysis device comprising:

        a container;
        a power supply;
        an anode;
        a cathode; and
        an electrolyte aqueous solution; wherein
        the anode and the cathode are in contact with the electrolyte aqueous solution,
        the anode has a copper rhodium delafossite compound represented by a chemical formula $CuRhO_2$, and
        the copper rhodium delafossite compound is in contact with the electrolyte aqueous solution, and

    (b) applying an electric potential difference between the cathode and the anode using the power supply to generate oxygen on the anode due to electrolysis of water which occurs on the copper rhodium delafossite compound.

2.  The method according to Claim 1, wherein
    the container further comprises a diaphragm; and
    the diaphragm divides the inside of the container into a first chamber having the anode and a second chamber having the cathode.

3.  A water electrolysis device for generating oxygen, comprising:

    a container;
    a power supply;
    an anode; and
    a cathode; wherein
    an electrolyte aqueous solution is stored in the container;
    the anode and the cathode are electrically connected with the power supply;
    the anode and the cathode are in contact with the electrolyte aqueous solution;
    the anode has a copper rhodium delafossite compound represented by a chemical formula $CuRhO_2$; and

the copper rhodium delafossite compound is in contact with the electrolyte aqueous solution.

4. The water electrolysis device for generating oxygen according to Claim 3, wherein
   the container further comprises a diaphragm; and
   the diaphragm divides the inside of the container into a first chamber having the anode and a second chamber having the cathode.

5. An anode for generating oxygen due to electrolysis of water, wherein
   the anode has a copper rhodium delafossite compound represented by a chemical formula $CuRhO_2$.

FIG. 1

**FIG. 2**

FIG. 3

Intensity / a.u.

— Measured Data

● $CuRhO_2$ disclosed in the Russian document

$2\theta$ / degree

FIG. 4

## Current Density [mA/cm²]

FIG. 5

Current Density [mA/cm²]

FIG. 6

FIG. 7A

FIG. 7B

CuRhO$_2$

Current Density [mA/cm$^2$]

(a) Before the sweeping was started

(b) After 1,000 times

FIG. 8

FIG. 9A

FIG. 9B

CuGaO$_2$

Current Density [mA/cm$^2$]

(a) At the start of the electric potential sweeping

(b) After electric current saturation

FIG. 10

## INTERNATIONAL SEARCH REPORT

International application No.

PCT/JP2014/002543

A. CLASSIFICATION OF SUBJECT MATTER
*C25B9/16*(2006.01)i, *C25B1/10*(2006.01)i, *C25B9/00*(2006.01)i, *C25B11/08* (2006.01)i

According to International Patent Classification (IPC) or to both national classification and IPC

B. FIELDS SEARCHED

Minimum documentation searched (classification system followed by classification symbols)
C25B9/16, C25B1/10, C25B9/00, C25B11/08

Documentation searched other than minimum documentation to the extent that such documents are included in the fields searched
Jitsuyo Shinan Koho         1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2009-299111 A  (NEC Corp.), 24 December 2009 (24.12.2009), entire text; all drawings (Family: none) | 1-5 |
| A | JP 59-067381 A  (Director General, Agency of Industrial Science and Technology), 17 April 1984 (17.04.1984), entire text; all drawings & US 4498962 A | 1-5 |
| A | JP 2009-224206 A  (Mitsubishi Electric Corp.), 01 October 2009 (01.10.2009), entire text; all drawings (Family: none) | 1-5 |

[X] Further documents are listed in the continuation of Box C.          [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 June, 2014 (02.06.14) | 10 June, 2014 (10.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/002543

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2011/028262 A2  (SUN CATALYTIX CORP.), 10 March 2011 (10.03.2011), entire text; all drawings & JP 2013-503257 A       & US 2011/0048962 A1 & US 2013/0118912 A1     & EP 2470690 A | 1-5 |
| P,X | Reiko HINOGAMI, Kenji TOYODA, Masato AIZAWA, Shigeo YOSHII, Takashi KAWASAKI, Hisaaki GYOTEN, Active copper delafossite anode for oxygen evolution reaction, Electrochemistry Communications, 2013.10, Volume 35, Pages 142-145 | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1400948 B

**Non-patent literature cited in the description**

- **J. SUNTIVICH et al.** A Perovskite Oxide Optimized for Oxygen Evolution Catalysis from Molecular Orbital Principles. *Science,* December 2011, vol. 334, 1383-1385

- *Russian Journal of Inorganic chemistry,* 1986, vol. 31, 1649